# FASCICULE DE BREVET EUROPEEN

(11) **EP 3 171 990 B1**
(45) Date de publication et mention de la délivrance du brevet: **13.06.2018**
(21) Numéro de dépôt: 15725742.9
(22) Date de dépôt: 15.04.2015
(51) Int. Cl.: B07C 7/00

(54) **PROCÉDÉ POUR TRIER DES OBJETS POSTAUX DANS UN CASIER DE TRI AVEC UN DÉNOMBREMENT AUTOMATIQUE DES OBJETS TRIÉS**
METHOD FOR POSTAL SORTING INTO A SORTING COMPARTMENT WITH COUNTING OF THE SORTED OBJECTS
POSTSORTIERVERFAHREN IN EIN SORTIERFACH MIT AUTOMATISCHER ZÄHLUNG DER SORTIERTEN GEGENSTÄNDE

(30) Priorité: 21.07.2014 FR 1457018
(43) Date de publication de la demande: 31.05.2017
(73) Titulaire: Solystic, 92220 Bagneux (FR)
(72) Inventeur: BENYOUB, Belkacem, F-91120 Palaiseau (FR)
(74) Mandataire: Prugneau, Philippe
(86) Numéro de dépôt international: PCT/FR2015/051026
(87) Numéro de publication internationale: WO 2016/012675

(56) Documents cités:
- WO-A1-2014/057185
- DE-U1- 20 218 212

## Description

### Domaine technique

L'invention concerne un procédé de tri d'objets dans un casier de tri comportant des cases de tri.

Par objet postal, on entend tout type d'objet postal pouvant présenter des dimensions variables, mais également des caractéristiques physiques variables. Ces objets postaux peuvent être, entre autres, une lettre simple, une carte postale, un magazine, une enveloppe avec ou sans fenêtre, un journal, ou encore un catalogue ou un colis.

### Technique antérieure

Le tri au casier d'objets postaux existe depuis longtemps, notamment dans les Postes.

D'ordinaire, le tri est effectué manuellement par un Opérateur expérimenté qui, dans un premier temps dépose les objets postaux à trier dans un réceptacle, puis prélève un à un les objets postaux, lit l'adresse de destination de chaque objet postal qu'il vient de prélever et le place dans une case de tri du casier de tri qui correspond à cette adresse de destination.

Le casier de tri qui est généralement disposé sur un bureau devant l'Opérateur, peut se présenter avec des cases de tri alignées en lignes et colonnes selon une matrice à deux dimensions.

Une fois le tri terminé, les objets postaux triés peuvent être directement récupérés dans les cases de tri du casier de tri de manière ordonnée par exemple pour préparer une tournée de facteur, ou encore être transférés dans un autre dispositif de tri afin d'affiner le tri.

De nos jours, les contraintes de temps ainsi que le nombre croissant d'objets postaux incitent les Postes à trouver des moyens techniques pour accélérer et fiabiliser ce tri manuel au casier.

On connaît du document de brevet FR-2996789, un aide au tri au casier consistant à placer lesdits objets à trier en pile, à prélever un à un les objets depuis le dessus de la pile, et à former automatiquement avec une certaine cadence des images numériques du dessus de la pile. L'image du dessus de la pile étant l'image d'un objet à trier qui comprend l'indication de tri apposée sur l'objet à trier, on peut produire automatiquement, à partir de l'image numérique de cet objet, un signal de repérage désignant une case de tri du casier de tri dans laquelle l'objet à trier doit être placé.

Dans un tel système d'aide au tri au casier, on peut former cinq images à la seconde tandis qu'on prélève un objet du dessus de la pile toutes les 3 à 10 secondes.

Il en résulte qu'on peut avoir beaucoup d'images pour un même objet prélevé du dessus de la pile.

En plus, l'Opérateur peut remettre sur le dessus de la pile un objet qui vient d'être prélevé, par exemple suite à une erreur de manipulation. L'Opérateur peut en outre remettre cet objet sur le dessus de la pile mais en changeant son orientation par rapport à celle qu'il avait avant d'être prélevé du dessus de la pile.

Dans une machine de tri postal avec un convoyeur de tri qui dirige automatiquement chaque objet dépilé en entrée de la machine vers une sortie de tri qui correspond à l'adresse postale qui est apposée sur l'objet, on forme une seule et unique image numérique de cet objet postal pour évaluer par OCR l'adresse postale et cette image avec les résultats de l'évaluation par OCR est stockée dans une base d'images qui peut servir à un vidéo-codage on-line ou offline si le résultat de l'évaluation d'adresse est équivoque.

Ces différentes données associées aux objets triés dans ce type de machine permettent de dénombrer de manière précise les objets triés, d'enregistrer un historique du traitement des objets pour détecter des erreurs de fonctionnement et aussi de réaliser des statistiques concernant notamment le taux de reconnaissance des adresses sur les objets postaux en fonction des caractéristiques physiques des images des objets triés automatiquement en machine ou des destinations de tri.

Dans le tri au casier avec un système spécifique d'aide au tri au casier dans lequel on forme des images numériques des objets triés comme indiqué plus haut, il existe un besoin de dénombrer de manière fiable et automatique les objets triés au casier, sans aucune action spécifique de l'Opérateur, et associer une seule image avec ses attributs à chaque objet postal physique comme pour un processus de tri postal dans une machine avec un convoyeur de tri automatique vers des sorties de tri.

Il existe aussi un besoin de fusionner les résultats de l'évaluation par OCR obtenus dans une machine de tri postal avec un convoyeur de tri avec ceux obtenus dans un système de tri postal au casier dans le but d'enregistrer un historique du traitement de tous les objets triés, cet historique devant être conçu pour pouvoir retrouver chaque objet par son image numérique et ses attributs.

Le but de l'invention est donc de répondre à ces besoins.

A cet effet, l'invention a pour objet un procédé pour trier des objets postaux dans un casier de tri postal comprenant des cases de tri, selon lequel on place lesdits objets à trier en pile et on prélève un à un les objets depuis le dessus de la pile pour les placer chacun dans une case du casier, et on forme automatiquement avec une certaine cadence des images numériques du dessus de la pile, caractérisé en ce qu'il comprend en outre les étapes suivantes :
a) enregistrer en mémoire d'une unité de traitement de données lesdites images numériques,
b) comparer entre elles selon un certain critère de ressemblance graphique lesdites images numériques pour former des modèles d'images représentatifs chacun d'une ou plusieurs images numériques successives qui se ressemblent,
c) associer à chaque modèle d'images une donnée indicative d'une durée de persistance; et
d) appliquer sur lesdits modèles d'images un filtre temporel pour éliminer ceux dont la durée de persistance est inférieure à une certaine valeur de seuil, les modèles d'images restant servant de base pour un dénombrement automatique des objets postaux triés dans les cases du casier.

L'idée à la base de l'invention est donc d'avoir un débit d'images très supérieur au débit de prélèvement normal des objets du dessus de la pile par l'Opérateur pour regrouper les images semblables entre elles dans des modèles d'image et ensuite élaguer les modèle d'image en tenant compte de leur durée de persistance.

Plus particulièrement, l'idée est que le regroupement des images est basé sur une combinaison de plusieurs critères de ressemblance différents afin de mettre en évidence le moindre changement d'objet sur le sommet de la pile d'objets postaux et décider de créer un nouveau modèle d'image quitte à ce qu'il soit éliminé dans la suite du processus de traitement des images.

On peut considérer que chaque objet postal reste au-dessus de la pile d'objets pendant environ 3 à 10 secondes avant d'être prélevé par l'Opérateur, cette durée dépendant des manipulations de l'Opérateur. Le débit d'images numériques produites par la caméra est de 4 à 5 images par seconde ce qui signifie qu'un objet sur le dessus de la pile peut engendrer de 15 à 50 images numériques.

On peut donc supposer qu'un modèle d'images est éphémère si il est construit avec très peu d'images numériques successives qui se ressemblent, par exemple deux images ce qui correspondant à une période de 400ms si on considère un débit de 5 images à la seconde.

L'idée à la base de l'invention part du principe qu'un tel modèle éphémère n'est pas représentatif d'un objet postal en tant que tel dans le processus de tri au casier car dans ce processus, l'Opérateur ne peut pas prélever en si peu de temps un objet postal du dessus de la pile. Ce type de modèle éphémère peut correspondre à des images d'objets postaux formées au moment où l'Opérateur passe sa main entre la caméra et le dessus de la pile d'objets postaux.

Avec cet élagage de modèles d'images numériques, on arrive à obtenir une liste de modèles d'images qui sont en fait des images produites par la caméra qui correspondent respectivement de manière fiable aux objets postaux prélevés et triés dans les cases du casier de tri même dans des situations d'erreurs de manipulation où un objet prélevé de la pile est reposé par l'Opérateur sur le dessus de la pile.

Cet élagage peut être renforcé par la comparaison de signatures d'image à composantes postale et graphique, ces signatures d'image étant des identifiants uniques pour des images d'objets postaux comportant une adresse de distribution.

Le procédé selon l'invention peut avantageusement présenter les particularités suivantes :
- on utilise comme critère de ressemblance graphique une combinaison de plusieurs critères différents de ressemblance graphique;
- on forme un modèle d'images à partir de l'image numérique la plus précoce parmi lesdites images numériques successives qui se ressemblent;
- on calcule pour chaque modèle d'image courant une signature d'image numérique comportant une composante postale qui est représentative des caractéristiques textuelles d'une adresse postale et une composante graphique qui est représentative des caractéristiques physiques d'une image numérique et on compare la signature du modèle d'image courant à la signature d'un modèle d'image précédent et on regroupe dans un même modèle d'image les deux modèles d'images courant et précédent si leurs signatures sont concordantes.

### Présentation sommaire des dessins

La présente invention sera mieux comprise et d'autres avantages apparaîtront à la lecture de la description détaillée ci-dessous illustrée par les dessins annexés, dans lesquels :
- la figure 1 est une vue schématique d'un dispositif d'aide pour le tri d'objets postaux au casier;
- la figure 2 est un schéma illustrant le regroupement d'images numériques selon l'invention
- la figure 3 illustre les étapes du procédé selon l'invention.

### Description des modes de réalisation

Un dispositif d'aide pour le tri manuel au casier d'objets connu du brevet FR-2996789 est décrit ci-après à titre d'exemple non limitatif pour le cas d'objets postaux plats sur lesquels sont apposés classiquement des informations d'adresse qui constitue l'information de tri.

Ce dispositif d'aide peut être utilisé dans un bureau de poste ou un centre de tri postal.

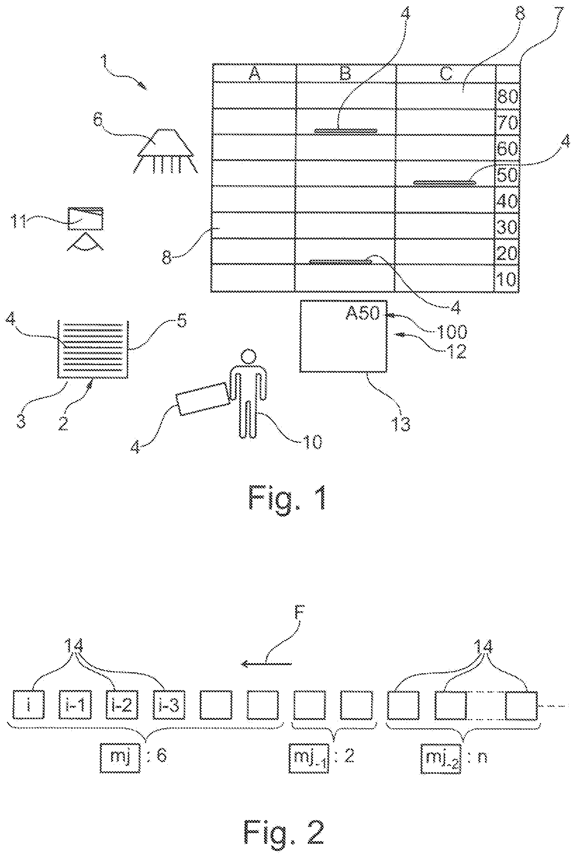

Le dispositif 1 d'aide au tri représenté sur la figure 1 comprend différents éléments dont un réceptacle 2, un éclairage 6, un dispositif de prise d'images 11, une unité de contrôle/commande 12 et un casier de tri 7.

Le réceptacle 2 est ici un bac de stockage qui comporte un fond 3 plat et des parois verticales 5. Le bac est conçu pour stocker à plat en pile verticale les objets 4 postaux. Le dessus du réceptacle 2 est ouvert de sorte à permettre à un Opérateur indiqué par 10 de prélever facilement et rapidement un à un les objets 4 depuis le sommet de la pile.

Les objets 4 sont ici rangés dans le réceptacle 2 de telle sorte qu'à chaque fois, l'objet 4 au sommet de la pile se présente avec sa face comportant l'adresse de destination qui est visible de l'extérieur du réceptacle 2, sur la figure 1 visible depuis le dessus du réceptacle 2.

L'éclairage 6 est conçu pour illuminer de manière homogène les objets 4 dans le réceptacle 2 et plus particulièrement l'objet 4 du dessus de la pile quelle que soit la hauteur ou la largeur de la pile.

Ainsi, selon l'exemple représenté sur la figure 1, l'éclairage 6 est disposé au-dessus du réceptacle 2 de sorte à assurer une bonne lisibilité de l'adresse de destination de l'objet 4 du dessus de la pile en s'affranchissant des conditions d'installation du dispositif 1 d'aide au tri notamment en présence de néons ou de fenêtres à proximité. L'intensité, la couleur et la position de la lumière émise par l'éclairage 6 pourraient également être réglées automatiquement selon la taille de la pile, la couleur des objets 4 ou bien les conditions d'éclairage de la pièce dans lequel le dispositif 1 d'aide au tri est placé.

Le casier de tri 7 comporte plusieurs cases de tri 8 conçues pour recevoir un ou plusieurs objets 4. Le casier de tri 7 est en particulier placé face à l'Opérateur 10 ou à tout autre endroit adapté de manière à ce que l'Opérateur 10 puisse accéder rapidement et facilement aux cases de tri 8. Dans l'exemple illustré sur la figure 1, le casier de tri 7 est disposé à coté du réceptacle 2 de sorte que l'Opérateur 10 par un simple mouvement du bras fait passer un objet 4 du réceptacle 2 à l'une des cases de tri 8 du casier de tri 7.

Sur la figure 1, on a représenté un casier de tri 7 matriciel. Les lignes et colonnes du casier de tri 7 sont ici numérotées ou référencées par un code de repérage de case visible par l'Opérateur 10, ici un code comportant une lettre indicative d'une colonne du casier de tri 7 , par exemple A B C D etc.., et un nombre indicatif d'une ligne du casier de tri 7 , par exemple 10, 20, 30 etc.

Le dispositif de prise d'images 11 dans l'exemple illustré sur la figure 1 est une caméra 11 placée au dessus du réceptacle 2 pour prendre des images numériques de l'objet 4 au sommet de la pile d'objets 4, chaque image numérique comportant alors (sauf si elle est cachée par la main de l'Opérateur) l'adresse de destination apposée sur l'objet postal 4.

La caméra 11 est en particulier conçue pour former de manière automatique des images numériques du dessus de la pile à une certaine cadence, par exemple quatre ou cinq images numériques par seconde, tout au long du processus de tri au casier.

La caméra 11 sera placée à une distance adéquate de la pile d'objets 4, par exemple à une distance lui permettant d'avoir toute la hauteur de la pile d'objets 4 dans sa profondeur de champ, ce qui permet d'assurer une image numérique nette de chaque objet 4 au fur et à mesure que l'Opérateur 10 prélèvera les objets 4 de la pile pour les placer dans les cases de tri 8 du casier de tri 7.

L'unité de traitement et de contrôle/commande 12 reçoit toutes les images produites par la caméra 11. Elle comporte une mémoire dans laquelle elle enregistre en séquence ces images numériques dans un ordre chronologique.

Quand il n'y a pas d'objets postaux dans le bac ou réceptacle 2, la caméra 11 forme une image du fond du bac qui est ici de couleur noire, c'est-à-dire qui présente une apparence très différente de celle des objets postaux. L'unité 12 peut donc détecter automatiquement l'absence d'objets postaux dans le bac en comparant une caractéristique de luminosité de l'image formée par la caméra 11 par rapport à un seuil prédéterminé.

Le processus de dénombrement dans l'unité 12 peut commencer automatiquement sur détection d'un signal entré par l'Opérateur, par exemple dans une carte RFID, ou encore sur détection d'un franchissement du seuil de la caractéristique de luminosité dans les images formées par la caméra 11 lorsqu'une pile d'objets postaux est chargé dans le bac. A noter que ce processus de dénombrement des objets postaux de la pile peut s'arrêter automatiquement dès que l'unité 12 détecte de nouveau que la caractéristique de luminosité est inférieure audit seuil prédéterminé, et redémarrer de nouveau au chargement d'une nouvelle pile d'objets postaux dans le bac sur détection du franchissement du seuil par cette caractéristique de luminosité.

Sur la figure 2, on a illustré une séquence d'images numériques 14 formées par la caméra 11 selon la séquence chronologique i, i-1, i-2, i-3, etc. et enregistrées en mémoire dans l'unité 12. La flèche F indique le sens chronologique, l'image la plus précoce étant à gauche de la flèche F, ici l'image i.

Selon l'invention, ces images sont comparées entre elles selon un certain critère de ressemblance graphique pour être regroupées et former une liste de modèles d'image représentatifs chacun d'une ou plusieurs images numériques successives qui se ressemblent.

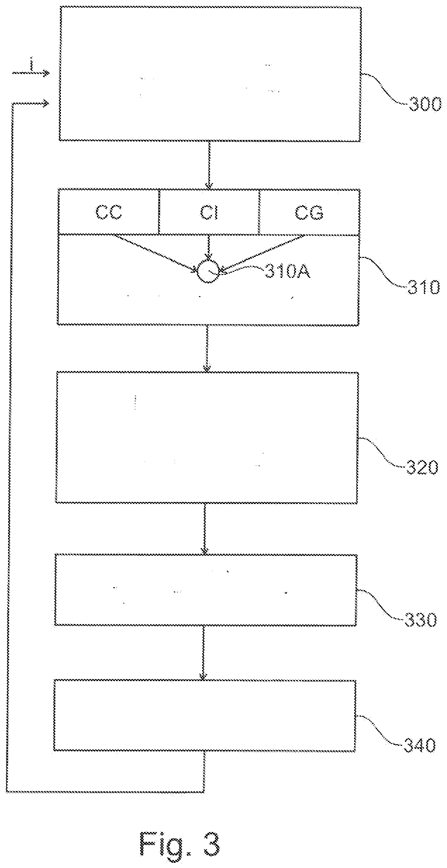

Sur la figure 3, on a illustré le processus de comparaison des images entre elles.

A l'étape 300, une nouvelle image i est formée par la caméra 11 et est enregistrée en mémoire dans l'unité 12. L'unité 12 maintient en mémoire les images précédentes i-1, i-2, etc....

Selon l'invention, le critère de ressemblance graphique est en fait une combinaison de plusieurs critère de ressemblance graphique, par exemple une combinaison de trois algorithmes différents permettant de déterminer si deux images consécutives, ici l'image i et l'image i-1 sont suffisamment proches graphiquement l'une de l'autre. La combinaison peut être un vote majoritaire sur les trois résultats de la comparaison.

Comme éléments de comparaison d'images, on peut utiliser une corrélation des composantes connexes indiquée par CC dans le bloc 310, ou encore une corrélation des images basse résolution indiquée par CI dans le bloc 310 ou encore une corrélation des classes graphiques indiqué par CG dans le bloc 310.

Pour la corrélation des composantes connexes, il s'agit tout d'abord de calculer les composantes connexes sur chaque image binaire i et i-1, puis de classer les composantes connexes par taille. Pour la comparaison, on peut utiliser uniquement les n plus grosses composantes (n=100), en excluant les composantes des bords ainsi que celles dans la zone du timbre. On compare les composantes connexes une par une sur des critères de taille et de position.

Pour la corrélation des images basse résolution, chaque image i et i-1 est sous-échantillonnée à basse résolution (1 pix/mm), puis on effectue une projection sur les axes x et y. On obtient pour chaque image deux signaux avec lesquels on effectue un calcul de corrélation.

Pour les classes graphiques, chaque image i et i-1 est sous-échantillonnée à très basse résolution (0.25pix/mm), puis on effectue un maillage de l'image qui va permettre d'extraire un vecteur d'attributs (extrema d'intensité, moyenne, écart-type, entropie,...) pour chaque région de l'image. On compare ensuite les deux matrices de vecteurs d'attributs.

Les résultats des corrélations sont donc combinés pour produire un résultat global de ressemblance ou de dissemblance en 310A dans le bloc 310.

En 320, si les deux images consécutives i et i-1 sont ressemblantes, on regroupe l'image i avec l'image i-1 et l'image i devient un modèle mj représentatif des images i et i-1 et éventuellement des images précédentes i-2, i-3, etc... comme illustré sur la figure 2.

Sur la figure 2, on a ainsi illustré trois modèles d'image mj, mj-1 et mj-2 d'images, le modèle mj regroupant ici 6 images consécutives, le modèle mj-1 regroupant 2 images consécutives et le modèle mj-2 regroupant n images consécutives.

Ces modèles d'images sont enregistrés en mémoire de l'unité 12 en association chacun avec une durée de persistance qui correspond ici à chaque fois au nombre d'images successives regroupées dans le modèle d'image correspondant.

On pourrait aussi datée chaque image numérique et calculer par cumul une durée de persistance pour chaque modèle d'images numériques. Dans le cas d'exemple, la durée de persistance du modèle mj est de 6, celle du modèle mj-1 est de 2 et celle du modèle mj-2 est de n.

En 330, selon l'invention, dans l'unité 12, on applique aux modèles d'images un filtre temporel qui consiste à éliminer un modèle ancien qui précède chronologiquement la création d'un modèle nouveau si la durée de persistance de ce modèle ancien est inférieure à une certaine valeur de seuil, qui peut être paramétrable en fonction de la cadence de prise d'images 14 par la caméra 11. Par exemple, si le seuil est de 2, alors le modèle nj-1 sera éliminé de la liste des modèles d'images numériques formés dans le bloc 320.

Le processus reboucle ensuite dans le bloc 300 pour une nouvelle image formée par la caméra 11.

Comme on peut le comprendre, chaque modèle d'images est constitué d'une image prise dans la séquence des images du modèle, ici de préférence l'image la plus précoce dans la séquence.

Sur la figure 1, on a illustré le mécanisme d'aide au tri casier selon lequel à chaque image produite par la caméra 11, en 300 on réalise dans l'unité 12 une évaluation automatique d'adresse via un système de reconnaissance de caractères OCR et une base d'adresses postales comme cela est bien connu pour les machines de tri postal.

Dans l'unité 12, on a enregistré un plan de tri qui est une table d'association qui associe des adresses de destination aux cases de tri 8 du casier de tri 7. A partir de l'adresse de destination reconnue dans l'image d'un objet 4 et du plan de tri, l'unité 12 peut déterminer la case de tri 8 du casier de tri 7 où l'objet 4 doit être à placé et donc produire un signal de repérage 100 sur un écran d'affichage 13 de l'unité 12 qui désigne l'emplacement de cette case de tri 8 dans le casier de tri 7.

Dans l'exemple illustré sur la figure 1, le signal de repérage 100 est un signal visuel sous la forme d'une concaténation d'un identifiant de ligne (ici A) et d'un identifiant de colonne (ici 50) du casier. On comprendra qu'à chaque prélèvement d'un objet 4 en haut de la pile dans le réceptacle 2, l'unité 12 génère un nouveau signal de repérage 100.

L'élagage des modèles d'images par le filtre temporelle dans le bloc 330 de la figure 3 peut être suivi en 340 par un regroupement de modèles pour supprimer encore des doublons dans les modèles restants qui peuvent apparaitre par exemple si l'Opérateur remet un objet sur le dessus de la pile juste après l'avoir prélevé une première fois.

Le traitement dans le bloc 340 utilise un mécanisme de signature d'images numériques à deux composantes distinctes, par exemple une composante image qui est représentative des caractéristiques physiques de l'image du modèle et une composante postale qui est représentative des caractéristiques lexicales de l'adresse postale reconnue dans le bloc 300 pour l'image du modèle en question.

La composante image est par exemple extraite par analyse statistique de la luminance des points de l'image numérique qui aura subie préalablement une succession de filtrages abaissant le niveau de résolution de l'image afin de réduire les temps de traitement pour l'analyse statistique et de disposer d'un contenu de type basse-fréquence lequel est peu sensible aux fluctuations de luminance lors d'acquisitions multiples. La luminance d'un point de l'image correspond à la valeur de niveau de gris du point de l'image.

A partir de l'image numérique basse résolution d'un envoi postal, l'unité 12 extrait par calcul, des attributs globaux représentatifs de caractéristiques physiques globales de l'image tels que la valeur de luminance moyenne des points de l'image numérique, écart-type, entropie des valeurs de luminance. On peut également extraire par calcul, des attributs locaux représentatifs de caractéristiques physiques locales de l'image prises sur des parties distinctes de l'image numérique. L'image numérique peut être subdivisée en plusieurs parties distinctes issues de différents quadrillages ou maillages dans l'image numérique. Le nombre de parties distinctes dans un quadrillage et le nombre de quadrillages peut être un paramètre de l'analyse statistique appliquée à l'image numérique pour extraire la composante image de la signature. A partir de chaque partie de l'image numérique issue d'un quadrillage, on peut extraire des attributs locaux tels que la valeur de luminance moyenne des points de cette partie de l'image numérique, écart-type, entropie des valeurs de luminance dans cette partie de l'image numérique. Ces attributs locaux contiennent une information d'autant plus discriminante que les envois postaux sont hétérogènes. L'ensemble des attributs globaux et locaux extraits pour une image numérique constituent donc la composante image de la signature.

La composante postale de la signature peut d'abord être indicative de la position spatiale des blocs d'information tel que le bloc d'adresse de destinataire dans lequel est réalisé l'OCR. La composante postale de la signature est représentative aussi des caractéristiques textuelles de ce bloc d'adresse de destinataire. Une description textuelle d'un bloc d'information peut consister dans l'indication du nombre de lignes de caractères détectées dans le bloc d'information, le nombre de mot détecté dans chaque ligne de caractères, le nombre de caractères détectés dans chaque mot de chaque ligne de caractères.

La construction d'une signature à deux composantes distinctes exploite donc le fait qu'une image numérique d'un envoi postal est un signal bidimensionnel interprétable dont le contenu peut être appréhendé tant au niveau physique qu'au niveau symbolique.

Donc dans le bloc 340 de la figure 3, l'unité 12 calcule pour chaque modèle, comme par exemple le modèle mi, des composantes images et postale et fait une comparaison deux à deux des deux composantes des signatures du modèle courant mi avec les composantes du ou des modèles qui le précèdent chronologiquement après le filtrage temporelle, ici mj-2 et réalise un regroupement des deux modèles comparés en cas de concordance des deux signatures. Il en est de même entre le modèle mj et les modèles (non présentés sur les figures) chronologiquement antérieurs à mj-2.

Il en résulte à la fin du processus de tri au casier, que l'unité 12 contient en mémoire une liste de modèles d'images restants qui sont représentatifs respectivement des objets postaux 4 effectivement triés dans le casier 7.

Le nombre de modèles dans la liste permet donc de dénombrer, par comptage automatiquement, le nombre d'objets traités dans le processus de tri au casier.

A chacun des modèles restants, on affecte un identifiant unique d'objet postal présenté dans ce casier de tri. Cette association d'une image (modèle d'image) à un objet physique permet de faire tous les traitements équivalents existant pour les machines de tri postal automatique, par exemple le vidéo-codage online ou offline et le tri en plusieurs passes de tri en bénéficiant à chaque fois des résultats des passes précédentes.

Il vient que ces données de traitement d'objets postaux non mécanisables peuvent être intégrés et fusionnés avec les données de traitement résultant d'un tri d'objets postaux mécanisables sur machine de tri postal avec convoyeur de tri postal au sein d'un système d'information global pour la gestion de production opérationnelle des objets postaux mécanisables avec les objets postaux non mécanisables. Il en résulte alors la possibilité d'établir des statistiques sur un traitement global des ces objets postaux mécanisables et non mécanisables.

Le procédé de tri au casier selon l'invention peut être utilisé dans un tri en une seul passe ou en plusieurs passes de tri.

Il va de soi que la présente invention ne saurait être limitée à la description qui précède mais est susceptible de subir quelques modifications sans pour autant sortir du cadre de l'invention.

## Revendications

1. Procédé pour trier des objets postaux (4) dans un casier (7) de tri postal comprenant des cases (8) de tri, selon lequel on place lesdits objets à trier en pile et on prélève un à un les objets depuis le dessus de la pile pour les placer chacun dans une case du casier, et on forme automatiquement avec une certaine cadence des images numériques du dessus de la pile, **caractérisé en ce qu'**il comprend en outre les étapes suivantes :
a) enregistrer (300) en mémoire d'une unité de traitement de données lesdites images numériques,
b) comparer (310) entre elles selon un certain critère de ressemblance graphique lesdites images numériques pour former des modèles d'images représentatifs chacun d'une ou plusieurs images numériques successives qui se ressemblent,
c) associer à chaque modèle d'images une donnée indicative d'une durée de persistance; et
d) appliquer (330) sur lesdits modèles d'images un filtre temporel pour éliminer ceux dont la durée de persistance est inférieure à une certaine valeur de seuil, les modèles d'images restants servant de base pour un dénombrement automatique des objets postaux triés dans les cases du casier.

2. Procédé selon la revendication 1, **caractérisé en ce qu'**on utilise comme critère de ressemblance graphique une combinaison de plusieurs critères différents (CC, CI, CG) de ressemblance graphique.

3. Procédé selon la revendication 1 ou 2, **caractérisé en ce qu'**on forme un modèle d'images à partir de l'image numérique la plus précoce parmi lesdites images numériques successives qui se ressemblent.

4. Procédé selon l'une des revendications 1 à 3, **caractérisé en ce qu'**on calcule pour chaque modèle d'images courant une signature d'image numérique comportant une composante postale qui est représentative des caractéristiques textuelles d'une adresse postale et une composante graphique qui est représentative des caractéristiques physiques d'une image numérique et **en ce qu'**on compare la signature du modèle d'image courant à la signature d'un modèle d'image précédent et on regroupe dans un même modèle d'images les deux modèles d'images courant et précédent si leurs signatures sont concordantes.

## Patentansprüche

1. Verfahren zum Sortieren postalischer Gegenstände (4) in einem Postsortierregal (7) mit Sortierfächern (8), bei dem die zu sortierenden Gegenstände in einem Stapel platziert werden und die Gegenstände von der Oberseite des Stapels einer nach dem anderen entnommen werden, um sie jeweils in einem Fach des Regals zu platzieren, und automatisch mit einem bestimmten Takt digitale Bilder der Oberseite des Stapels gebildet werden, **dadurch gekennzeichnet, dass** es ferner die folgenden Schritte umfasst:
a) Speichern (300) der digitalen Bilder in einem Speicher einer Datenverarbeitungseinheit,
b) Vergleichen (310) untereinander gemäß einem bestimmten graphischen Ähnlichkeitskriterium der digitalen Bilder zum Bilden von Bildmodellen, die für ein oder mehrere aufeinanderfolgende, sich ähnelnde digitale Bilder repräsentativ sind,
c) Verknüpfen einer für die Bestanddauer indikativen Angabe mit jedem Bildmodell; und
d) Anwenden (330) auf die Bildermodelle eines zeitlichen Filters zum Eliminieren derjenigen, deren Bestanddauer geringer ist als ein bestimmter Schwellenwert, wobei die verbleibenden Bildmodelle als Basis für ein automatisches Zählen der in den Fächern des Regals sortierten postalischen Gegenstände dienen.

2. Verfahren nach Anspruch 1, **dadurch gekennzeichnet, dass** als graphisches Ähnlichkeitskriterium eine Kombination mehrerer verschiedener graphischer Ähnlichkeitskriterien (CC, CI, CG) verwendet wird.

3. Verfahren nach Anspruch 1 oder 2, **dadurch gekennzeichnet, dass** ein Bildmodell gebildet wird ausgehend von dem frühesten digitalen Bild unter den sich ähnelnden aufeinanderfolgenden Bildern.

4. Verfahren nach einem der Ansprüche 1 bis 3, **dadurch gekennzeichnet, dass** für jedes laufende Bildmodell eine digitale Bildsignatur errechnet wird, umfassend eine für textliche Charakteristika einer postalischen Adresse repräsentative postalische Komponente und eine für physische Charakteristika eines digitalen Bildes repräsentative graphische Komponente, und dass die Signatur des laufenden Bildmodells mit der Signatur eines vorhergehenden Bildmodells verglichen wird und in ein selbes Bildmodell die zwei laufenden und vorhergehenden Bildmodelle zusammengruppiert werden, wenn ihre Signaturen übereinstimmen.

## Claims

1. A method of sorting postal articles (41) into a postal sorting frame (7) comprising sorting slots (8), in which method said articles to be sorted are placed in a stack, and the articles are taken one-by-one from the top of the stack so as to place each of them in a sorting slot, and digital images of the top of the stack are formed automatically at a certain rate, said method being **characterized in that** it further comprises the following steps:
a) recording (300) said digital images in the memory of a data-processing unit;
b) mutually comparing (310) said digital images on the basis of a certain graphical resemblance criterion, so as to form image models, each of which is representative of one or more successive digital images that are similar-looking;
c) associating each image model with data indicating a persistence time; and
d) applying (330) a time filter to said image models so as to eliminate those models whose persistence time is less than a certain threshold value, the remaining image models serving as a basis for automatically counting the sorted postal articles that are sorted in the slots of the frame.

2. A method according to claim 1, **characterized in that** the graphical resemblance criterion that is used is a combination of a plurality of different graphical resemblance criteria (CC, CI, CG).

3. A method according to claim 1 or claim 2, **characterized in that** an image model is formed on the basis of the most precocious digital image among said successive digital images that are similar-looking.

4. A method according to any one of claims 1 to 3, **characterized in that**, for each current image model, a digital image signature is computed that is made up of a postal component that is representative of the textual characteristics of a postal address, and of a graphical component that is representative of the physical characteristics of a digital image, and **in that** the signature of the current image model is compared with the signature of a preceding image model, and, if their signatures match, said current and preceding image models are grouped together in the same image model.
